# EUROPEAN PATENT APPLICATION

(11) **EP 1 363 454 A1**
(43) Date of publication of application: **19.11.2003**
(21) Application number: 02712334.8
(22) Date of filing: 14.02.2002
(51) Int. Cl.: H04N 5/91, H04N 5/44, G11B 20/10, H04H 1/00

(54) **INFORMATION PROCESSOR**

(30) Priority: 14.02.2001 JP 2001036411
(71) Applicant: Sony Corporation, Tokyo 141-0001 (JP)
(72) Inventor: HAMADA, Ichiro, c/o SONY CORPORATION, Shinagawa-ku, Tokyo 141-0001 (JP); NINOSEKI, Noriko, c/o SONY CORPORATION, Shinagawa-ku, Tokyo 141-0001 (JP); FUJII, Asako, c/o SONY CORPORATION, Shinagawa-ku, Tokyo 141-0001 (JP)
(74) Representative: Pilch, Adam John Michael
(86) International application number: JP0201218
(87) International publication number: WO02065767

(57) **Abstract**

Disclosed herein is an information processing apparatus comprising a receiver and capable of judging what kind of content is being input. In step S1, the receiver receives a content that is broadcast in real time. When outputting the received content to a different apparatus connected to the receiver illustratively via a digital bus, the receiver supplements the output content with a broadcast bit set to indicate the real-time nature of the broadcast content. On detecting the broadcast bit set in the input content, the different apparatus judges that the content in question is being broadcast in real time. If no broadcast bit is found set in the input content, the different apparatus judges the content to have been reproduced from storage. This invention applies illustratively to receivers for receiving TV broadcasts.

## Description

### TECHNICAL FIELD

The present invention relates to an information processing apparatus. More particularly, the invention relates to an information processing apparatus adapted advantageously to a device for transmitting and receiving digital data.

### BACKGROUND ART

Recent years have witnessed a growing trend of digital broadcasting getting widespread acceptance with the general public. Along with the trend has come an increasing popularization of digital broadcast receivers as well as recorders for recording broadcast contents received by such receivers. The receivers are each equipped with a digital output terminal such as an IEEE 1394 terminal that allows digitally received data to be output also in digital form. If digitally output data from such a terminal are recorded unmodified by a digital data recorder, there is little difference in terms of image and sound quality between the original content (received by the receiver) and its copy (recorded by the recorder); it is possible to make a copy that is virtually identical to the original in quality.

In view of copyright protection, that is an undesirable development that needs to be forestalled. One way to counter the trend is by having distinct copyright information included in broadcast contents; another way is by applying encryption techniques to transmission lines so that unauthorized viewers cannot make illegal copies of the original.

One disadvantage of the conventional countermeasures against illegal duplication is that copy protection systems cannot be switched depending on the content source. Typically, recorders cannot make distinction between different sources of the same content (e.g., transmitted from broadcast media, reproduced from storage of data received earlier from broadcast media, or output from package media such as DVD (digital video disk)) in order to take suitable copy protection measures accordingly.

### DISCLOSURE OF INVENTION

The present invention has been made in view of the above circumstances and provides an apparatus and a method for outputting a received content being broadcast in real time to an input side together with information indicating the real-time nature of the broadcast content being output, so that the input side can judge whether the input content is currently broadcast on a real time basis.

In carrying out the invention and according to a first aspect thereof, there is provided an information processing apparatus comprising: a receiving element for receiving data being broadcast; a adding element for adding the data received by the receiving element with information indicating that the data are broadcast data; and an outputting element for outputting to a different apparatus the data added with the information by the adding element.

In one preferred structure of the information processing apparatus according to the invention, the information may be written to a reserved field in a CIP header complying with IEEE 1394 standards.

In another preferred structure of the inventive information processing apparatus, the information may be written to an unencrypted data part complying with IEEE 1394 standards.

In a further preferred structure of the inventive information processing apparatus, the different apparatus may be a recorder.

In an even further preferred structure of the inventive information processing apparatus, if the data input to the recorder are constituted by the data added with the information by the adding element, then the input data may be recorded temporarily to the recorder.

In a still further preferred structure of the inventive information processing apparatus, if the data input to the recorder are constituted by the data added with the information by the adding element and if the input data are copy-protected, then the input data may be recorded on a time-shifted basis.

In a yet further preferred structure of the inventive information processing apparatus, if the data input to the recorder are constituted by the data added with the information by the adding element and if the input data are not copy-protected, then the input data may be recorded normally.

According to a second aspect of the invention, there is provided an information processing method comprising the steps of: controlling reception of data being broadcast; adding the data received in the reception controlling step with information indicating that the data are broadcast data; and controlling output to a different apparatus of the data added with the information in the adding step.

According to a third aspect of the invention, there is provided a storage medium which stores a computer-readable program comprising the steps of: controlling reception of data being broadcast; adding the data received in the reception controlling step with information indicating that the data are broadcast data; and controlling output to a different apparatus of the data added with the information in the adding step.

According to a fourth aspect of the invention, there is provided a program for causing a computer to execute the steps of: controlling reception of data being broadcast; adding the data received in the reception controlling step with information indicating that the data are broadcast data; and controlling output to a different apparatus of the data added with the information in the adding step.

Through the use of the information processing apparatus, information processing method, and program according to the invention, received broadcast data are added with information indicating that the data are broadcast data. The data thus added with the information are output to another apparatus that will handle the data accordingly.

### BRIEF DESCRIPTION OF DRAWINGS

Fig. 1 is a block diagram showing a typical configuration of a system comprising an information processing apparatus according to this invention;
Fig. 2 is a block diagram depicting an internal structure of a receiver 2;

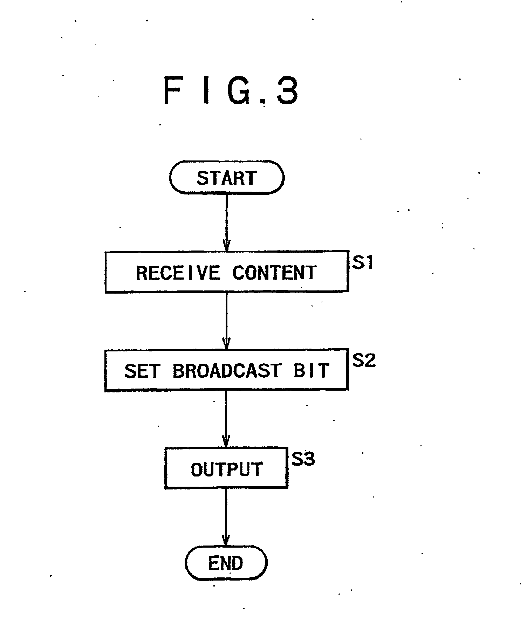

Fig. 3 is a flowchart of steps performed by the receiver 2;
Fig. 4 is a schematic view illustrating a typical format of an isochronous packet;
Fig. 5 is a schematic view indicating a typical format of an isochronous packet header;
Fig. 6 is a schematic view representing a typical format of a CIP header;
Fig. 7 is a flowchart of steps performed by an HDD video recorder 4; and
Fig. 8 is an explanatory view sketching various media.

### BEST MODE FOR CARRYING OUT THE INVENTION

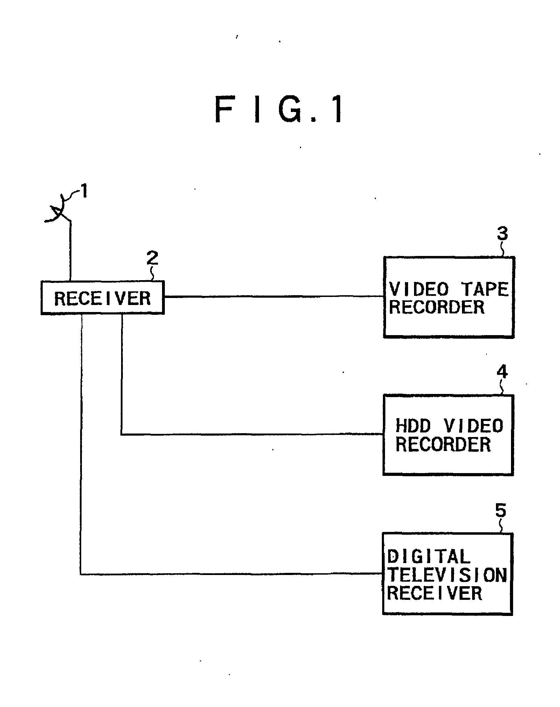

Preferred embodiments of this invention will now be described by referring to the accompanying drawings. Fig. 1 is a block diagram showing a typical configuration of a system comprising a receiver to which this invention is applied. Digital data that are broadcast illustratively via a satellite are received by an antenna 1 and input to the receiver 2.

The receiver 2 is connected through suitable cables to three key devices: a video tape recorder 3 that records the received digital data (called the content hereunder) onto a removable video tape (storage medium); an HDD video recorder 4 that records the received content to an unremovable HDD (hard disc drive); and a digital television receiver 5 that presents users with images and sounds based on the received content.

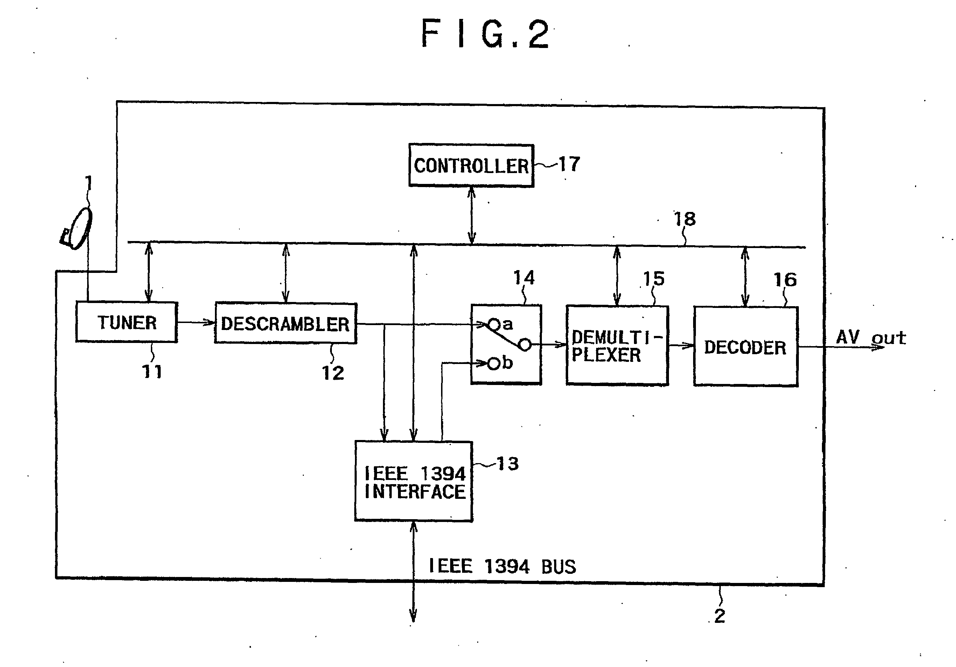

Fig. 2 is a block diagram depicting an internal structure of the receiver 2. Described below is an example in which an IEEE 1394 interface is adopted for communication purposes. The content received by the antenna 1 is input to a tuner 11 of the receiver 2. The tuner 11 extracts from the content the data constituting a program designated by a user and forwards the extracted data to a descrambler 12. Usually, digitally broadcast contents are scrambled so that viewers and/or listeners other than those authorized under contract will not be able to watch or listen to the broadcast programs. When the user is judged authorized to watch or listen to the program in question, the descrambler 12 descrambles the input content.

The descrambled content is output to an IEEE 1394 interface 13 and to a contact "a" of a switch 14. The IEEE 1394 interface 13 is connected to an IEEE 1394 bus which in turn is coupled to the HDD video recorder 4 and digital television receiver 5.

If the switch 14 conducts through its contact "a," then the content fed to the contact "a" is output via the switch 14 to a demultiplexer 15. The demultiplexer 15 extracts video and audio data from the input content and outputs the extracted data to a decoder 16. The decoder 16 suitably decodes the input video data and audio data to generate video and audio signals in analog format. The output from the decoder 16 is sent to an analog video tape recorder or a monitor television receiver (not shown) connected through a suitable analog cable.

A controller 17 controls the components inside the receiver 2. The components outlined above are interconnected via a bus 18.

Below is a description of the content that is received by the receiver 2. The content to be received by the receiver 2 is compressed illustratively by MPEG (Moving Picture Experts Group) standards to enhance data transmission efficiency. The compressed content is multiplexed typically with an MPEG transport stream for efficient transmission.

The MPEG transport stream handled by a suitable system is arranged to include PSI/SI (Program Specific Information/Service Information), i.e., information necessary for the receiver 2 to receive broadcast programs, such as PAT (Program Association Table), PMT (Program Mapped Table), NIT (Network Information Table), SDT (Service Description Table), and EIT (Event Information Table), as well as a program guide and other information needed by users in selecting desired contents.

There are a number of types of broadcast contents. Some contents are free to view and to record (e.g., so-called free-broadcasts); others are subject to restrictions when recorded. Digital broadcasts contain the above-mentioned PSI/SI including information about recording. The receiver 2 receiving such digital broadcasts is given suitable content output instructions to restrict recording. This illustratively involves adding the composite video output with so-called macro-vision and CGMS (Copy Generation Management System) information for recording restriction purposes.

In a broadcasting system, each receiver 2 may be furnished with special features such as a CA (conditional access) function allowing only authorized viewers under contract to watch broadcast programs. In that setup, each viewer (under contract) may be issued a smart card or like storage medium retaining information about the contract conditions. In order to watch a desired program, the viewer inserts the storage medium into the receiver 2 which then allows the viewer to access the content of interest according to the stored conditions.

Suppose now that the content received by the receiver 2 is to be output to an external device. Recording of the received content to an external device is subject to copy control by a system for transmitting copy generation information such as the above-mentioned CGMS, and by a method whereby the content to be output is encrypted before being sent to a destination and a decryption key is transmitted to a suitably authenticated destination device. The latter method is based illustratively on AKE (Authentication and Key Exchange) criteria of DTLA under IEEE 1394.

If the content received by the receiver 2 were reproduced in real time by the digital television receiver 5 for the user to watch, there would be no problem. More often than not, this is not the case. Where real-time viewing is not practical, the content may be first recorded to the HDD video recorder 4 for subsequent reproduction and viewing. If the broadcast content were not allowed to be recorded, the inconvenience to authorized users under contract would be enormous.

On the other hand, if the content recorded on the HDD video recorder were allowed to be recorded to other HDD video recorders or the like, a plurality of copies would be made with little deterioration in quality with regard to the original. This is a serious problem in view of copyright protection.

The copy control measures mentioned above were described as utilizing copy generation information alone for control purposes. That means the content recorded on the HDD video recorder 4 cannot be identified as being transmitted in real time, reproduced from storage of another device, or output from package media.

The HDD video recorder 4 is thus incapable of judging whether the recorded broadcast content is to be output for time-shifted recording purposes or for creating a copy package. Hence the predicament: if copy restrictions are too strict, not even a copy of a currently broadcast content can be made for time-shift purposes; if the restrictions are too lax, illegal copies can proliferate in defiance of copyright protection. Under the circumstances, there has been an urgent need for capabilities allowing the HDD video recorder 4 appropriately to handle contents to be recorded.

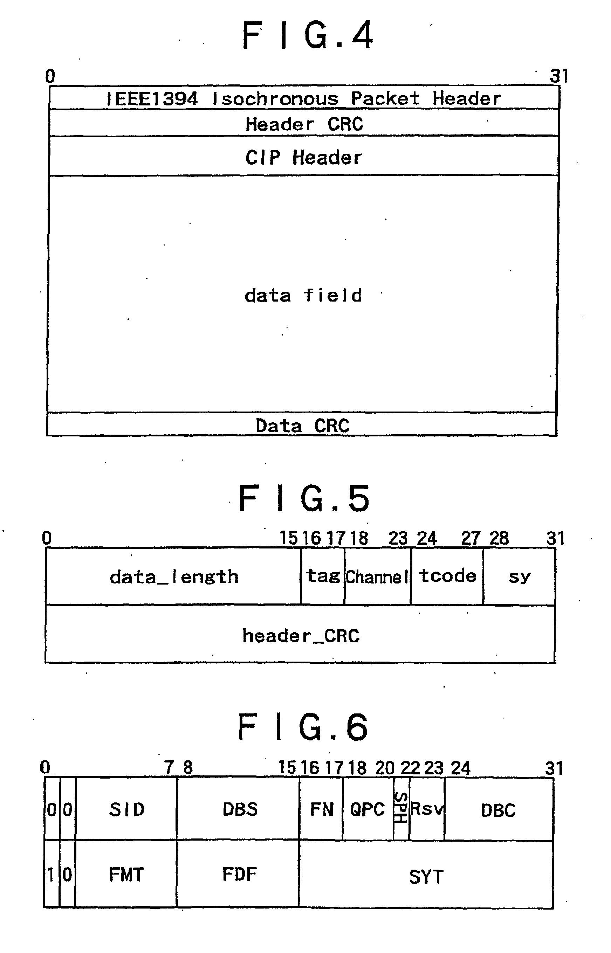

With the preferred embodiment of this invention, the broadcast content received by the receiver 2 is given a flag (called the broadcast bit hereunder) set to indicate that the content in question is a received content. The workings involved are described below with reference to the flowchart of Fig. 4. In step S1, the content received by the antenna 1 is input to the tuner 11 of the receiver 2. From the tuner 11, the input content is forwarded to the IEEE 1394 interface 13 through the descrambler 12.

In step S2, the IEEE 1394 interface 13 sets the broadcast bit in the input content. In step S3, the content with the broadcast bit set therein is output to a device such as the HDD video recorder 4 connected to the IEEE 1394 interface 13 via an IEEE 1394 bus. The IEEE 1394 interface 13 does not set a broadcast bit in any content which is input over the IEEE 1394 before being output to a contact "b" of the switch 14.

When the input content is found to have the broadcast bit set therein, the content-recording device can judge that the content in question is a currently broadcast content. In other words, any content with no broadcast bit set therein is judged to be a time-shifted content (i.e., output after reproduction from storage on the HDD video recorder 4) or a content that is output after reproduction from a package medium.

The field in which to set the broadcast bit may illustratively be a reserved field of a CIP header or any other location judged convenient by the device for receiving the transport stream. Described below with reference to Fig. 4 is the format of an isochronous packet exchanged between devices as per IEEE 1394 standards. The isochronous packet is constituted by a 1394 isochronous packet header, a header CRC, a CIP header, a data field, and a data CRC.

The first two quadlets (2 x 4 bytes) in the isochronous packet make up the IEEE 1394 isochronous packet header whose details are shown in Fig. 5. The header comprises: a data length (data_length) field indicating the size of data that follow the two quadlets in the header; a tag field indicating whether a CIP header is added to the data field (data_field); a channel field representing a transmitting channel; a tcode (transaction code) field indicative of a transaction code; a sy field representative of a synchronization code; and a header CRC (header_CRC) field that functions as an error detection code in the header.

Fig. 6 is a detailed view of the CIP header. As illustrated, the CIP header is headed by an SID (source node ID) field indicating the node ID of a transmission source. The SID field is followed successively by: a DBS (data block size in quadlets) field indicating a data block size; an FN (fraction number) field representing the number of blocks into which one source packet is divided; a QPC (quadlet padding count) field indicating the number of dummy quadlets added; and an SPH (source packet header flag) field acting as a flag indicating whether the source packet has a source packet header.

The SPH field is further followed by a reserved field (Res) for future use, and by a DBC (data block continuity counter) field indicative of the value on a counter that counts the number of continuous data blocks to check for any missing data block. The next line is headed by an FMT (format ID) field representing a data format type. The FMT field is followed by an FDF (format dependent field) field accommodating a value depending on the format in use, and by an SYT field constituting a time-stamp field used by a digital video cassette recorder (DVCR) for frame synchronization.

As mentioned above, the reserved field (Res) in the CIP header is reserved for future use. This embodiment of the invention utilizes the reserved field to accommodate the broadcast bit. Some other suitable field may be used alternatively to hold the broadcast bit.

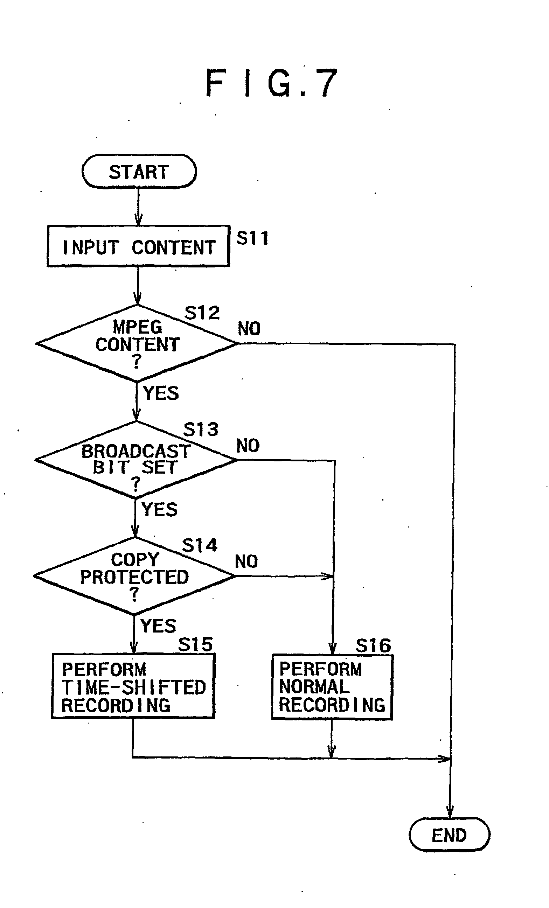

How the HDD video recorder 4 works will now be described by referring to the flowchart of Fig. 7. In step S11, a content is input to the HDD video recorder 4. In step S12, a check is made to see if the input content is an MPEG-based content. If the input content is not judged to be an MPEG-based content, the content is not regarded as processible by the HDD video recorder 4 and the processing in the flowchart of Fig. 7 is brought to an end.

If in step S12 the input content is judged to be an MPEG-based content, step S13 is reached. In step S13, a check is made to see if the input content has a broadcast bit set therein. The broadcast bit, if there is one, is written in the reserved field of the CIP header in the input content. Referencing the reserved field allows the check in step S13 to be carried out. If the broadcast bit is judged to exist in step S13, step S14 is reached. In step S14, a check is made to see if the content is copy-protected.

The information about scrambled data transmission for copy protection is written illustratively in the sy field (Fig. 5) of the isochronous packet header. Referencing the sy field makes it possible to determine whether the content is scrambled for copy protection purposes. If in step S14 the content is judged to be copy-protected, step S15 is reached. In step S15, the content is recorded on a time-shifted basis. When control is passed to step S15, that means the content is being currently broadcast and copy-protected.

Even if the currently broadcast content is copy-protected, not all authorized viewers can watch the broadcast program in real time. With that taken into account, the content is allowed to be recorded on a time-shifted basis.

If in step S13 the content is not found to have the broadcast bit set therein, i.e., if the content is judged derived from another HDD video recorder or from a DVD player instead of the currently broadcast content, then step S16 is reached for normal recording. In step S16, the input content is recorded in accordance with copy control information (e.g., CGMS) set therein. Illustratively, the content is subject to one of three copy-related options: copy freely permitted, copy allowed once, or no copy allowed.

Step S16 is also reached if the input content is simply judged copy-protected in step S14. This means that the content judged copy-protected is subject to normal recording which, in this case, includes the option of no copy permitted.

When information constituted by the broadcast bit is included in the content, the device admitting the content can judge, based on the information, whether the content is currently broadcast, reproduced from a storage of broadcast contents, or derived from package media. Once such distinctions are made, the content-admitting device can implement more fine-tuned measures of copy control accordingly.

Although the broadcast bit was shown written to the reserved field of the CIP header in the foregoing description, this is not limitative of the invention. Alternatively, the broadcast bit may be written anywhere in the suitable IEEE 1394 standards as long as the location allows the bit to be exchanged unencrypted between devices. Even if the broadcast bit is written to an encrypted data part, the invention may still apply because the bit can be verified and acted on in a suitable post-decryption process.

Although the embodiment above was shown based on relevant IEEE 1394 and MPEG standards, this is not limitative of the invention. The invention may also be applied to data that are compressed and transmitted according to other appropriate methods, schemes and techniques.

The series of steps described above may be executed either by hardware or by software. For software-based processing to take place, programs constituting the software may be either incorporated beforehand in dedicated hardware or installed upon use from a suitable storage medium into a general-purpose personal computer or like equipment capable of executing diverse functions.

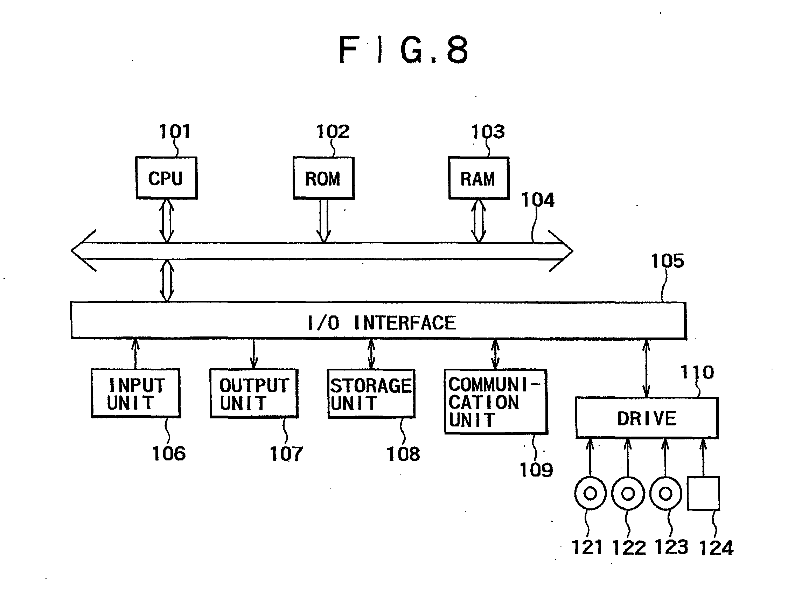

As shown in Fig. 8, the storage medium is offered to users apart from the computer not only as a package medium containing the programs and constituted by magnetic discs (including floppy discs) 121, optical discs (including CD-ROM (compact disc-read only memory) and DVD (digital versatile disc)) 122, magneto-optical discs (including MD (Mini-disc)) 123, or semiconductor memories 124; but also in the form of a ROM 102 or a storage unit 108 such as a hard disc drive containing the programs and incorporated beforehand in the computer.

In this specification, the steps which are stored on the storage medium and which describe the programs to be executed represent not only the processes that are carried out in the depicted sequence (i.e., on a time series basis) but also processes that are conducted parallelly or individually.

In this specification, the term "system" refers to an entire configuration made up of a plurality of component devices.

### INDUSTRIAL APPLICABILITY

As described, the information processing apparatus, information processing method, and program according to the invention supplement received data with information indicating that the data are broadcast data, so that when the information-added data are output to another apparatus, the receiving apparatus can recognize the data to be broadcast data.

## Claims

1. An information processing apparatus comprising:
receiving means for receiving data being broadcast;
adding means for adding said data received by said receiving means with information indicating that said data are broadcast data; and
outputting means for outputting to a different apparatus said data added with said information by said adding means.

2. The information processing apparatus according to claim 1, wherein said information is written to a reserved field in a CIP header complying with IEEE 1394 standards.

3. The information processing apparatus according to claim 1, wherein said information is written to an unencrypted data part complying with IEEE 1394 standards.

4. The information processing apparatus according to claim 1, wherein said different apparatus is a recorder.

5. The information processing apparatus according to claim 4, wherein, if the data input to said recorder are constituted by said data added with said information by said adding means, then the input data are recorded temporarily to said recorder.

6. The information processing apparatus according to claim 5, wherein, if the data input to said recorder are constituted by said data added with said information by said adding means and if the input data are copy-protected, then said input data are recorded on a time-shifted basis.

7. The information processing apparatus according to claim 5, wherein, if the data input to said recorder are constituted by said data added with said information by said adding means and if the input data are not copy-protected, then said input data are recorded normally.

8. An information processing method comprising the steps of:
controlling reception of data being broadcast;
adding said data received in said reception controlling step with information indicating that said data are broadcast data; and
controlling output to a different apparatus of said data added with said information in said adding step.

9. A storage medium which stores a computer-readable program comprising the steps of:
controlling reception of data being broadcast;
adding said data received in said reception controlling step with information indicating that said data are broadcast data; and
controlling output to a different apparatus of said data added with said information in said adding step.

10. A program for causing a computer to execute the steps of:
controlling reception of data being broadcast;
adding said data received in said reception controlling step with information indicating that said data are broadcast data; and
controlling output to a different apparatus of said data added with said information in said adding step.
